# EUROPEAN PATENT SPECIFICATION

(11) **EP 2 248 916 B1**
(45) Date of publication and mention of the grant of the patent: **30.10.2013**
(21) Application number: 09717326.4
(22) Date of filing: 03.03.2009
(51) Int. Cl.: C21C 1/04, C21C 1/02, C22B 7/00, C22B 9/10, F27B 1/00, C21C 7/064

(54) **PROCESS FOR REMOVAL OF COPPER CONTAINED IN STEEL SCRAPS**
VERFAHREN ZUR ENTFERNUNG VON IN STAHLSCHROTTTEILEN ENTHALTENEM KUPFER
PROCÉDÉ D'ÉLIMINATION DE CUIVRE CONTENU DANS DES DÉCHETS D'ACIER

(30) Priority: 05.03.2008 JP 2008054635; 06.11.2008 JP 2008284935; 15.01.2009 JP 2009006297
(43) Date of publication of application: 10.11.2010
(73) Proprietor: JFE Steel Corporation, Tokyo 100-0011 (JP)
(72) Inventor: MATSUI, Akitoshi, Tokyo 100-0011 (JP); UCHIDA, Yuichi, Tokyo 100-0011 (JP); KISHIMOTO, Yasuo, Tokyo 100-0011 (JP); OGASAWARA, Futoshi, Tokyo 100-0011 (JP)
(74) Representative: HOFFMANN EITLE
(86) International application number: PCT/JP2009/054370
(87) International publication number: WO 2009/110627

(56) References cited:
- JP-A- 7 316 618
- JP-A- 9 143 586
- JP-A- 63 192 812
- JP-A- 2007 002 305
- SU-A1- 1 227 689
- US-A- 2 403 419
- US-A- 2 512 578
- US-A- 4 925 488
- TADASHI IMAI ET AL.: 'Na2S-kei Flux to Tanso Howa Yotetsu Kan no Do no Bunpai Heiko' JOURNAL OF THE IRON & STEEL INSTITUTE OF JAP vol. 74, no. 4, April 1988, pages 640 - 647
- HIROKAZU SHIRAKAWA ET AL.: 'Yoyu Flux ni yoru Yosen no Datsudo' JOURNAL OF THE IRON & STEEL INSTITUTE OF JAP vol. 72, no. 12, September 1986, page S961

## Description

### TECHNICAL FIELD

The present invention relates to a method for removing copper in steel scraps that may pose a quality problem when producing high-quality steel with use of the steel scraps as an iron source.

### BACKGROUND ART

An iron source used in steel making is principally hot metal obtained by reduction of iron ore in a blast furnace. However, steel scraps generated in processing of ferrous materials and steel scraps generated with deterioration of mechanical products and building and plants are also used much as iron. Production of hot metal in blast furnace needs a considerable amount of energy for reducing and melting of iron ore. However, the steel scraps only need melting heat and use of steel scraps in steelmaking is advantageous in that the amount of used energy corresponding to reduction heat of iron ore can be reduced. Accordingly, acceleration of use of steel scraps is desirable in terms of prevention of global warming by reduction of carbon-dioxide emissions and energy saving.

Conventionally, steel scraps are often used by being inserted directly into a steel furnace such as an electric arc furnace or converter. However, if various steel scraps are used as the iron source, composition adjustment of produced molten steel is difficult. Besides, as the converter uses combustion heat of carbon in hot metal as melting heat of the steel scraps, if the blend ratio of steel scraps is increased, it becomes difficult to maintain the temperature required for the next steps, which is a drawback. On the other hand, the electric arc furnace is low in energy efficiency and has a drawback in terms of energy use amount. Then, in recent years, attention has been focused on a method of using a shaft furnace, which is of high energy efficiency, and melting steel scraps simply and at low costs as a previous step to the converter to obtain as uniform a composition as possible.

Meanwhile, in reuse of steel scraps, tramp elements, notably copper and tin accompanying these steel scraps are inevitably mixed in the molten iron during melting of the steel scraps. The tramp elements are components that impair steel property and need to be held at a fixed concentration or less. Therefore, as an iron source for producing high-quality steel, it is difficult to use low-quality steel scraps that may contain copper and tin. However, considering increase of generated steel scraps and increasing demands for use of steel scraps to reduce CO₂, it is necessary to accelerate reuse of low-quality steel scraps.

As a current, sole, effective and practical technique for using low-quality steel scraps, there is a method for decomposing steel scraps physically, separating harmful constituents by humans or magnetic separation, mixing the separated harmful constituents with a material that hardly contains harmful constituents and using the mixture within the bounds of no problem as material for steel. However, in this method, it is difficult to reuse the steel scraps of used cars in large amounts and this method is not sufficient as a solution to remove copper in steel scraps for an expected future time when steel scraps are generated in large amounts.

On the other hand, as a method for removing copper after the copper is mixed in molten iron, the following principle invention is known. That is, the principle technical knowledge of bringing copper-containing high carbon molten iron and FeS-Na₂S flux into contact and separating and removing a copper component in the molten iron into the flux as Cu₂S is disclosed in a report in "Tetsu-to-Hagane" (iron and steel) vol.74 (1988) No. 4. p. 640 (IMAI Tadashi et al.) (non-patent document 1) and "Tetsu-to-Hagane" vol. 77 (1991) No. 4. p. 504 (Chao Wang et al.) (non-patent document 2). This technique proposes the possibility of wider application than the above-mentioned physical removal method as a technique for removing the copper.

As the method for removing copper based on this principle technical knowledge, Japanese Unexamined Patent Application Laid-open No. 4-198431 (patent document 1) discloses a method of, after melting copper-containing steel scraps with addition of carbon to produce copper-containing high carbon molten iron and then making the molten iron contact and react with flux containing Na₂S as the main component thereby to separate and remove a copper component of the molten iron into Na₂S base flux as Cu₂S.

### DISCLOSURE OF THE INVENTION

### Problems to be solved by the Invention

However, in the above-mentioned principle technical knowledge, a sulfur (S) component from the Na₂S base flux is mixed into the molten iron. Besides, the ratio of the concentration of Cu in slag formed on the molten iron by melting of the flux and the concentration of Cu in the molten iron (partition ratio) is at most about 30 and it is necessary to prevent the partition ratio from decreasing, by stirring the slag sufficiently.

In addition, the patent document 1 does not disclose desulfurization of the high carbon molten iron after removal of copper at all. Further, in the patent document 1, the copper removal treatment is carried out by agitation of the slag and molten iron by injecting Ar gas from the bottom of a refining vessel (hot-metal transfer ladle). However, the agitation of slag is not enough and the facilities are complicated as the gas blown-in tuyere needs to be provided at the bottom of the hot-metal transfer ladle. Furthermore, in order to compensate for insufficient agitation, an electric heater is provided for holding the reaction temperature at 1200 to 1500 °C, and a refining vessel with a cover is used to prevent contact with the air, however, such facilities become large.

Therefore, there are still many problems to put the technique disclosed in the patent document 1 and the above-mentioned principle technical knowledge to practical use.

The present invention was carried out in view of the foregoing, and has an object to provide a method for removing copper in copper-containing steel scraps efficiently and without large facilities when producing high-quality steel with use of the steel scraps as an iron source.

### Means for solving the problems

In order to solve the above-mentioned problems, a first invention provides a method for removing copper in steel scraps characterized in comprising the steps of: melting copper-containing steel scraps with addition of carbon to produce hot metal for steelmaking; then, removing copper contained in the hot metal with use of sulfur-containing flux; and removing sulfur contained in the hot metal, wherein the concentration of carbon prior to the copper removal treatment is 2% by mass or more and the temperature of the hot metal prior to the copper removal treatment is 1200°C or higher and 1500°C or lower, as set forth in claim 1.

A method for removing copper in steel scraps according to a second embodiment is characterized in that, in the first invention, the sulfur-containing flux has Na₂S as a main component.

A method for removing copper in steel scraps according to a third embodiment is characterized in that, in the first or second invention, a material having Na₂CO₃ as a main component and an iron-sulfur alloy are used as starting materials of the sulfur-containing flux.

A method for removing copper in steel scraps according to a fourth embodiment is characterized in that, in any one of the first to third inventions, the hot metal before copper removal by the sulfur-containing flux has a temperature of 1200 °C or higher and 1500 °C or lower, and contains carbon at a concentration of 2% by mass or more and copper at a concentration of 0.1% or more by mass and 1.0% by mass or less.

A method for removing copper in steel scraps according to a fifth embodiment is characterized in that, in the fourth invention, the hot metal before copper removal by the sulfur-containing flux has a temperature of 1250 °C or higher and 1350 °C or lower.

A method for removing copper in steel scraps according to a sixth embodiment is characterized in that, in any one of the first to fifth inventions, the hot metal before copper removal by the sulfur-containing flux contains sulfur at a concentration of 0.01% by mass or more.

A method for removing copper in steel scraps according to a seventh embodiment is characterized in that, in any one of the first to sixth inventions, removing of the copper contained in the hot metal is carried out by refining equipment with mechanical stirrer.

A method for removing copper in steel scraps according to an eighth embodiment is characterized in that, in any one of the first to sixth inventions, removing of the copper contained in the hot metal is carried out by injecting the sulfur-containing flux with a carrier gas into the hot metal in a refining vessel.

Here, the sulfur-containing flux may be at least partially added by injection (injection adding). As an application of the eighth invention, at least a part of a starting material of the sulfur-containing flux (for example, soda ash and ferrosulfur) may be injected with a carrier gas into the hot metal in the refining vessel. When a part of the starting material is injected, a starting material that does not contain sulfur (for example, soda ash) may be only injected and a starting material that contains sulfur (for example, ferrosulfur) may be supplied by other means.

A method for removing copper in steel scraps according to a ninth embodiment is characterized in that, in any one of the first to eighth inventions, melting of the copper-containing steel scraps with addition of the carbon is conducted by using a shaft furnace having a coke bed formed inside.

A method for removing copper in steel scraps according to a tenth embodiment is characterized in than, in any one of the first to sixth inventions, melting of the copper-containing steel scraps with addition of the carbon is conducted by using a shaft furnace having a coke bed formed inside, and the sulfur-containing flux is supplied to the hot metal passing through a tilting runner at casthouse from the shaft furnace to a hot metal vessel thereby to remove the copper in the hot metal.

Amethodfor removing copper in steel scraps according to an eleventh embodiment is characterized in that, in any one of the first to tenth inventions, removing of the sulfur contained in the hot metal is carried out by refining equipment with mechanical stirrer.

A method for removing copper in steel scraps according to a twelfth embodiment is characterized in that, in any one of the first to eleventh inventions, the hot metal from which the copper is removed with use of the sulfur-containing flux is mixed with blast furnace hot metal, and then, the sulfur contained in the hot metal that is mixed with the blast furnace hot metal is removed.

### BRIEF DESCRIPTION OF THE DRAWINGS

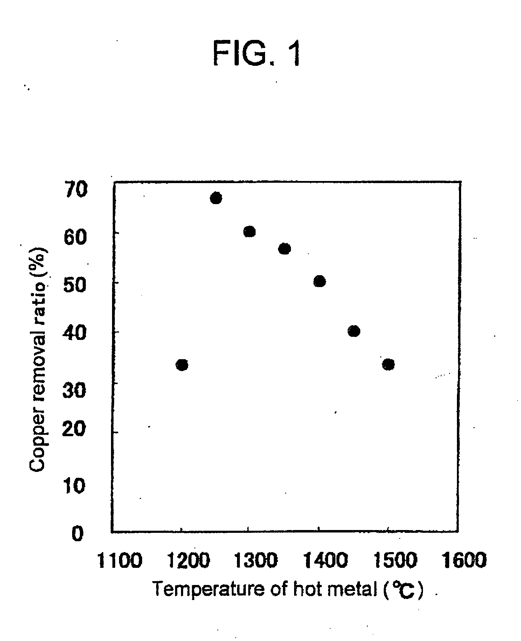

Fig. 1 is a view illustrating relationship between the temperature of hot metal before copper removal treatment (horizontal axis: °C) and copper removal ratio of the copper removal treatment (vertical axis: %)

### BEST MODE FOR CARRYING OUT THE INVENTION

The present invention will be described concretely below.

### <Production of hot metal and Copper removal treatment>

When melting copper-containing steel scraps with addition of carbon and producing hot metal for steelmaking that contains carbon, an almost all amount of copper in the steel scraps is melted in the hot metal. According to the present invention, as means for removing this copper, sulfur-containing flux is brought into contact with the hot metal and the copper in the hot metal is removed in the sulfur-containing flux as copper sulfide Cu₂S. The sulfur-containing flux is preferably flux containing sulfide of alkaline earth metal or alkaline metal as the main component. In order to increase the amount of sulfur contained in the sulfur-containing flux, an iron-sulfur alloy (ferrosulfur) may be mixed.

The flux is particularly preferably flux containing Na₂S as the main component. Use of the flux containing Na₂S as the main component is extremely advantageous in terms of the cost efficiency and copper removal efficiency if industrially broadly available Na₂CO₃ (soda ash) is used as the Na source and the iron-sulfur alloy (ferrosulfur) is used as the sulfur source. In other words, when a material containing Na₂CO₃ as the main component and the iron-sulfur alloy are brought into contact Na₂S is generated in the flux. This Na₂S exerts the copper removal effect as the main component in the flux. Therefore, there is no need to produce Na₂S in advance.

The amount of sulfur in the sulfur-containing flux and the amount of flux used may be determined appropriately in consideration of the desired concentration of copper, the copper removal efficiency and the cost. For the flux containing Na₂S as the main component, it is preferable the mole fraction of Na₂S in the flux is about 0.2 or more in terms of more efficient copper removal. This goes for other sulfur-containing flux (for example, flux containing sulfide of alkaline earth metal or alkaline metal as the main component), the mole fraction of S in the sulfur-containing material is preferably about 0.2 or more. Here, when the material containing Na₂CO₃ as the main component and the iron-sulfur alloy are used, the weight ratio thereof is preferably 1:0.4 to 1:4, and mole fraction of S may be determined such that the mole fraction of estimated generated Na₂S is about 0.2 or more.

Here, copper removal with use of the sulfur-containing flux is confirmed in principle, however, as it is a process of low partition ratio (ratio of Cu concentration in the flux to Cu concentration in the hot metal), it is effective for expediting copper removal to expedite material transfer at the slag part formed in the refining vessel by adding the sulfur-containing flux. For this purpose, it is effective to stir also the slag layer. Particularly, in the present invention, the copper removal treatment is carried out at the hot metal stage, however, the temperature range of the hot metal (1200 to 1400 °C) is lower than the temperature range of molten steel (1550 to 1700 °C), the slag fluidity is low, and therefore, the copper removal can be expedited more effectively by stirring of the slag.

As a method for stirring the hot metal and the slag on the hot metal simultaneously, stirring gas may be injected into the hot metal via an injection lance immersed in the hot metal in the refining vessel or a tuyere set at the bottom of the refining vessel thereby to stir the slag and the hot metal. However, refining equipment with mechanical stirrer may be used to perform the copper removal treatment for more efficient stirring.

As a representative example of the refining equipment with mechanical stirrer, there is equipment for stirring with use of impeller (stirring blades). That is, the impeller is immersed (generally from above) in the hot metal in the ladle refining vessel, and then, the impeller is rotated around the axis center as the rotational axis thereby to stir the hot metal and the sulfur-containing flux added on the hot metal forcibly. In the case of the refining equipment with mechanical stirrer, the sulfur-containing flux added onto the hot metal is sufficiently mixed into the hot metal so that the hot metal and the sulfur-containing flux are stirred extremely efficiently. For example, the mechanical stirrer type has greater effect in mixing of the slag in the hot metal than the gas stirring method disclosed in the patent document 1 and allows significantly improved stirring.

Further, a method of injecting powdery sulfur-containing flux together with a carrier gas into the hot metal from an injection lance immersed in the hot metal, that is, so-called flux injecting method is also preferable. In this case, the powdery sulfur-containing flux injected in the hot metal is in direct contact with the hot metal. Further, as new not-yet-reacted sulfur-containing flux comes into contact with the hot metal continuously, the effect is exerted that is equivalent to that of the case where material transfer in the slag part is expedited and reaction of the hot metal with the sulfur-containing flux is expedited. In addition, as the carrier gas functions as stirring gas, though its stirring strength is lower than that of the refining equipment with mechanical stirrer, the stirring of the hot metal with the slag in the hot metal may be carried out much more effectively than the gas stirring method or the like.

In this copper removal treatment, in order to prevent mixture of air into the atmosphere, reducing gas such as propane gas or inert gas such as Ar gas may be supplied onto the surface of the hot metal bath.

After the copper removal treatment, slag formed by addition of sulfur-containing flux is removed outside the system.

In the present invention, the temperature and content of carbon, copper, sulfur and the like of hot metal before copper removal treatment, that is, hot metal for steelmaking containing carbon that is produced by melting of copper-containing steel scraps with addition of carbon can be determined appropriately in accordance with the type and capacity of treatment facilities and properties of flux and hot metal, rough standards of which are described below.

The temperature of the hot metal prior to the copper removal treatment preferably is 1200 °C or higher, and 1500 °C or lower, and preferably is 1250 °C or higher, and 1350 °C or lower. If the temperature of the hot metal is less than 1200 °C, there may be a problem of solidification of the hot metal and flux due to low temperatures. Particularly, in consideration of assurance of temperatures in the subsequent desulfurization step and converter decarburization step, the temperature is preferably 1250 °C or more. On the other hand, if the temperature is 1500 °C or more, evaporation of the flux due to high temperatures is unignorable. That is, in order to perform copper removal reaction effectively by preventing evaporation of the sulfur-containing flux, it is preferable that the temperature is as low as possible. Therefore, the temperature of the hot metal is preferably 1350 °C or less for effective copper removal reaction.

Further, the concentration of carbon prior to the copper removal treatment is preferably 2% by mass or more. The reaction in which the copper in the hot metal becomes copper sulfide proceeds thermodynamically more easily, the concentration of the carbon in the hot metal is higher. If the concentration is 2% by mass or more, the reaction to generate the copper sulfide proceeds remarkably. On the other hand, if the concentration of carbon prior to the copper removal treatment is less than 2% by mass, the liquidus temperature of the hot metal increases and there may be a problem such as adhesion of the hot metal to the vessel wall. Here, there is no problem if the concentration of the carbon contained is increased to the saturated concentration.

The concentration of copper in the hot metal prior to the copper removal treatment preferably is 0.1% or more by mass, and 1.0% by mass or less. If the concentration of copper in the hot metal prior to the copper removal treatment exceeds 1.0% by mass, the amount of sulfur-containing flux required for removal of copper becomes excessively large and practically, the burden is heavy. On the other hand, if the concentration is less than 0.1% by mass, it can be applied to high-quality steel without performing the copper removal treatment, for example, by dilution with hot metal containing a small amount of copper.

Further, the concentration of sulfur in the hot metal before the copper removal treatment is preferably 0.01% by mass or more, and more preferably 0.05% by mass or more. If the concentration of sulfur in the hot metal before the copper removal treatment is less than 0.01% by mass, the amount of sulfur dissolved from the sulfur-containing flux into the hot metal becomes too large and the efficiency of use of the sulfur-containing flux is decreased and is not cost effective. The upper limit of concentration of sulfur needs not be specifiedparticularly, however, it is preferably 0.5% by mass or less as a too high concentration of sulfur poses a problem for the desulfurization treatment.

As to components of the hotmetal before the copper removal treatment other than those mentioned above, any composition basically for steel purposes may be selected without problem. As a preferable composition, for example, the concentration of silicon is 0.5% by mass or less, and the concentration of manganese is 0.5% by mass or less. If they exceed these values, silicon oxide and manganese oxide resultant from oxidation of these components in the copper removal treatment transfer into slag, and the amount of slag is increased and the burden of slag treatment is increased. Besides, the efficiency of copper removal reaction of the sulfur-containing flux can be improved more by preventing too much existence of silicon oxide and manganese oxide.

Here, the hot metal for steelmaking produced by melting the copper-containing steel scraps with addition of carbon may be mixed with hot metal tapped from a blast furnace (hereinafter referred to as "blast furnace hot metal") according to need and then, the copper contained in the mixed hot metal may be removed with use of sulfur-containing flux.

The composition of the copper-containing steel scraps may be such that the concentration of copper in the obtained hot metal is 0.1% by mass or more. As dilution by the blast furnace hot metal is possible, the upper limit of the concentration of copper in the hot metal from steep scraps is permissibly the order of 1.0% by mass. Here, the concentration of copper of low-quality steel scraps generally falls within the above-mentioned range.

Producing of the hot metal by melting copper-containing steel scraps with addition of carbon may be conducted by a method of using an electric arc furnace, a method of using a converter, a method of using a shaft furnace or the like. Particularly, the method of using the shaft furnace having a coke bed formed inside is preferable.

Here, the shaft furnace with the coke bed formed inside is a device for charging carbon containing steel scraps and coke and, if necessary, fluxes from an upper part of the shaft furnace, blowing air, oxygen-enriched air, oxygen gas or the like via a tuyere provided at a lower part of the shaft furnace, preferably as hot gas to burn the coke, melting the fluxes and copper containing steel scraps inside the furnace by combustion heat of the coke and bringing the hot metal and liquid slag out of the outlet at the furnace bottom. The hot metal tapped off from the outlet at the furnace bottom flows in a refractory tilting runner provided at a casthouse in front of the furnace, falls down on a hot-metal vessel such as a hot-metal transfer ladle arranged under the tip end of the tilting runner, and is stored in the hot-metal vessel. Further, in the shaft furnace with the coke bed formed inside, solely coke is filled in a range from the furnace bottom to a certain level above the tuyere and burned to melt the copper-containing steel scraps charged onto the coke. The coke filled at the furnace bottom is called "coke bed". As this coke bed is burned out, coke is charged from the upper part of the furnace to compensate for the coke bed and continue melting. Molten iron generated by melting of the copper-containing steel scraps flows down between pieces of coke and is mixed with coke to become hot metal. This shaft furnace with the coke bed formed inside shows higher energy efficiency than the electric arc furnace or the like.

When such a shaft furnace having the coke bed formed inside is used to produce hot metal, generally the concentration of sulfur in the hot metal becomes higher than that of blast furnace hot metal. This high-concentration of sulfur can be used to promote copper removal with use of sulfur-containing flux extremely advantageously. That is, as the concentration of sulfur in the hot metal is high, transfer of sulfur from the sulfur-containing flux into the hot metal is minimized and the efficiency of use of the sulfur-containing flux can be increased remarkably. Here, the concentration of sulfur in the blast furnace hot metal depends on raw materials, however, it is generally 0.04% by mass or less except at the very initial period of operation or at the start-up time after a shutdown.

If the shaft furnace is used to melt the copper-containing steel scraps, the hot metal tapped off from the outlet passes through the tilting runner at casthouse and is dropped and poured into a hot metal vessel. Here, this hot metal passing through the tilting runner at casthouse may be supplied with sulfur-containing flux by addition from above, blasting with gas, injecting with gas or the like for the copper removal treatment. The sulfur-containing flux supplied in the hot metal passing through the tilting runner at casthouse not only conducts the copper removal treatment to the hot metal while the hot metal passes through the tilting runner at casthouse, but also is stirred intensively with the hot metal by falling down from the tilting runner at casthouse into the hot metal vessel so that the copper removal treatment of the hot metal can be conducted efficiently. In this case, the copper removal reaction is expedited further by placing sulfur-containing flux in the hot metal vessel in advance and separately. Here, if copper removal only in this tilting runner at casthouse is insufficient, further copper removal can be carried out by the above-mentioned method, for example, by using the refining equipment with mechanical stirrer, flux injection method or the like.

The concentration of copper in the hot metal after copper removal treatment in the present invention may be set in accordance with a use purpose of steel, and it is usually about 0.25 % by mass or less.

### <Desulfurization treatment>

With copper removal treatment, sulfur in the sulfur-containing flux is inevitably moved to the hot metal so that the concentration of sulfur in the hot metal increases. Further, in terms of copper removal efficiency, the concentration of sulfur is often set to be higher before the copper removal treatment. Therefore, after the copper removal treatment, desulfurization treatment for removing the sulfur in the hot metal is carried out. The desulfurization is carried out through letting the desulfurization agent react with the hot metal. Specifically, the desulfurization may be carried out by any well-known method of a method using refining equipment with mechanical stirrer, a method of injecting powder (of desulfurization agent) from a lance and a method using a converter. For example, after the copper removal treatment in the refining equipment with mechanical stirrer, generated slag may be removed and then, desulfurization may be carried out in the same refining equipment with mechanical stirrer. In this method, the extremely high stirring effect can be utilized in both of the copper removal treatment and the desulfurization.

As the desulfurization agent, a desulfurization agent having CaO as the main component, a desulfurization agent having calcium carbide as the main component, a desulfurization agent having soda ash as the main component, metal Mg or the like may be used.

Further, in performing of the desulfurization, blast furnace hot metal may be mixed with the copper-removed hot metal additionally, and then, the mixed hot metal may be subjected to desulfurization. Furthermore, the desulfurized hot metal may be mixed with blast furnace hot metal.

Prior to desulfurization, the sulfur-containing flux that is subjected to the copper removal treatment is removed from the refining vessel. If the desulfurization is carried out without removing the sulfur-containing flux, copper sulfide (Cu₂S) in the sulfur-containing flux is decomposed and returned into the hot metal so that the concentration of copper in the hot metal may be increased. The slag removal operation may be carried out by a well known method such as a method using slag skimmer, a method using a slag suction device, or a method of inclining the hot metal vessel to discharge slag in the vessel, and the method may be selected as suitable for facilities each steel plant has.

The concentration of sulfur contained in the hot metal after desulfurization in the present invention may be set in accordance with the purpose of using steel, however, it is usually set to be about 0.25% by mass or less.

As described up to this point, according to the above-described method, as after melting of copper-containing steel scraps with addition of carbon, copper in hot metal of the steel scraps are removed in the sulfur-containing flux, the copper can be effectively removed which is difficult to separate by the method for removing the copper by magnetic separation or the like after decomposing the steel scraps physically. Further, as after removal of the copper, the sulfur contained in the hot metal that was brought from the sulfur-containing flux was removed, it is possible to obtain hot metal containing low copper and sulfur from the copper-containing steel scraps efficiently.

### [Examples]

### (Example 1)

Tests were conducted as follows: a shaft furnace having a coke bed formed inside was used to melt copper-containing steel scraps and produce hot metal for steelmaking, and this hot metal was subjected to the copper removal treatment with use of flux having FeS-Na₂S as the main component. After the copper removal treatment, the hot metal was further subjected to desulfurization with use of a CaO base desulfurization agent.

The copper removal treatment was carried out in the following three methods, that is, after charging about 5 tons of hot metal for steelmaking in a ladle-shaped refining vessel, a method of adding flux having FeS-Na₂S (mole fraction of Na₂S in the flux: 0.4 ) as the main component onto the hot metal in refining equipment with mechanical stirrer, immersing, in the hot metal, impeller covered with a refractory material and rotating the impeller to stir the hot metal and flux (test No. 1), a method of injecting stirring gas from an injection lance immersed in the hot metal inside the refining vessel to stir the hot metal while adding flux having FeS-Na₂S as the main component (test No. 2), and a method of injecting flux having FeS-Na₂S as the main component as well as carrier gas from an injection lance immersed in the hot metal inside the refining vessel (test No. 3) . In all of the tests, the flux having FeS-Na₂S as the main component added was 200 kg per 1 ton of hot metal.

After the copper removal treatment, generated slag was removed and in all of the test Nos. 1 to 3, in the refining equipment with mechanical stirrer, the impeller covered with the refractory material was immersed in the hot metal and the impeller was rotated to stir the hot metal and desulfurization agent thereby to conduct the desulfurization. Table 1 shows change in of concentrations of copper and sulfur in the hot metal and change in of temperature of the hot metal.

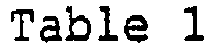

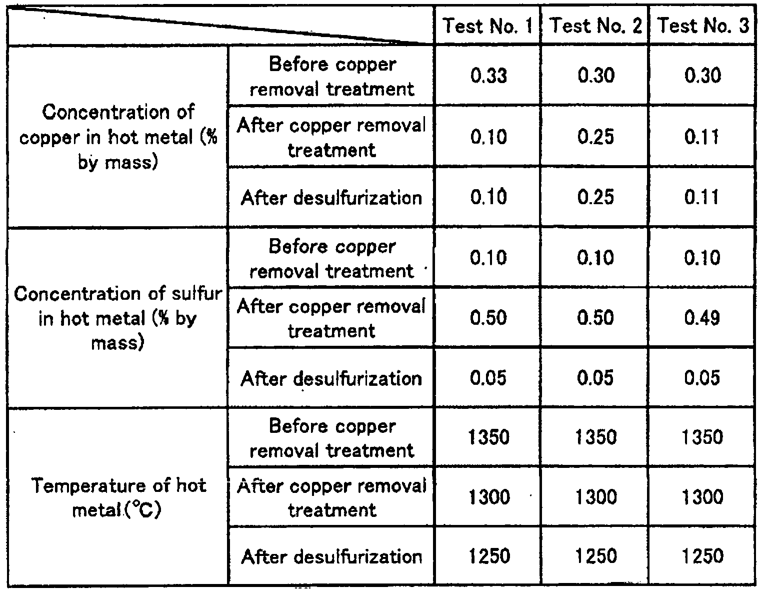

As shown in Table 1, in the test No. 1 where the impeller was used to stir the hot metal and sulfur-containing flux in the refining equipment with mechanical stirrer, the concentration of copper in the hot metal was drastically lowered from 0.33% by mass to 0.10% by mass. Besides, in the test No. 3 in which the sulfur-containing flux was added by injection, like in the test No. 1, the concentration of copper in the hot metal was drastically lowered from 0.30% by mass to 0.11% by mass. On the other hand, in the test No. 2 in which the sulfur-containing flux was added while stirring the hot metal with stirring gas, the copper was removed but the copper removal ratio was low. It was found that the copper removal treatment was preferably conducted with the refining equipment with mechanical stirrer.

As seen from the test Nos. 1 and 3, it was possible to obtain hot metal having a lower concentration of copper and a lower concentration of sulfur finally, by conducting desulfurization, and to use this as hot metal for high-quality steel without problem.

### (Example 2)

Tests were conducted such that hot metal for steelmaking of different temperature and composition was used to perform copper removal treatment and desulfurization treatment after the copper removal treatment (test Nos. 4 to 15).

The copper removal treatment was conducted by charging about 5 tons of hot metal for steelmaking in a ladle-shaped refining vessel and adding refining flux for copper removal from a refining agent supplying hopper provided above the ladle. The refining flux for copper removal used was 40 kg of iron-sulfur alloy (ferrosulfur, the percentage of sulfur content: 48% by mass) per ton of hot metal and 30 kg of soda ash (Na₂CO₃) per ton of hot metal. In the test No. 15, the refining flux for copper removal used was 53 kg of iron-sulfur alloy (ferrosulfur, the percentage of sulfur content: 36% by mass) per ton of hot metal and 30 kg of soda ash (Na₂CO₃) per ton of hot metal.

Stirring of the hot metal in the ladle was conducted by immersing impeller covered with a refractory material in the hot metal and rotating the impeller to stir the hot metal and flux.

In all of the tests, slag generated after the copper removal treatment was removed and after removal of the slag, desulfurization was conducted in the refining equipment with mechanical stirrer. The desulfurization was carried out by charging 20 kg of CaO base desulfurization agent per ton of hot metal, immersing impeller covered with the refractory material in the hot metal and rotating the impeller to stir the hot metal and desulfurization agent. Table 2 shows a list of temperatures and components of the hot metal before and after the copper removal treatment and after the desulfurization treatment. Here, components of the hot metal other than those listed in Table 2 were 0.05 to 0.4% by mass of silicon, 0.05 to 0.4% by mass of manganese and 0.02 to 0.2% by mass of phosphorus.

**Table 2**

| Test No. | Before copper removal treatment | | | | After copper removal treatment | | | After desulfurization | |
|---|---|---|---|---|---|---|---|---|---|
| | Hot metal [S] (% by mass) | Hot metal [Cu] (% by mass) | Hot metal [C] (% by mass) | Temperatur e of hot metal (°C) | Hot metal [S] (% by mass) | Hot metal [Cu] (% by mass) | Copper removal ratio (%) | Hot metal [S] (% by mass) | Hot metal [Cu] (% by mass) |
| 4 | 0.10 | 0.30 | 3.8 | 1300 | 0.50 | 0.16 | 47 | 0.15 | 0.16 |
| 5 | 0.10 | 0.30 | 2.5 | 1300 | 0.45 | 0.18 | 40 | 0.10 | 0.18 |
| 6 | 0.10 | 0.30 | 4.7 | 1300 | 0.50 | 0.14 | 53 | 0.15 | 0.14 |
| 7 | 0.10 | 0.30 | 4.2 | 1250 | 0.40 | 0.11 | 63 | 0.10 | 0.11 |
| 8 | 0.10 | 0.30 | 4.7 | 1400 | 0.55 | 4.15 | 50 | 0.20 | 0.15 |
| 9 | 0.20 | 0.30 | 4.7 | 1400 | 0.60 | 0.13 | 57 | 0.25 | 0.13 |
| 10 | 0.10 | 0.30 | 1.5 | 1450 | 0.30 | 0.21 | 30 | 0.05 | 0.21 |
| 11 | 0.10 | 0.30 | 42 | 1190 | 0.30 | 0.28 | 7 | 0.28 | 0.28 |
| 12 | 0.10 | 0.30 | 4.7 | 1600 | 0.60 | 0.22 | 27 | 0.15 | 0.22 |
| 13 | 0.02 | 0.30 | 3.8 | 1300 | 0.30 | 0.19 | 37 | 0.08 | 0.19 |
| 14 | 0.04 | 0.30 | 4.2 | 1300 | 0.19 | 0.19 | 37 | 0.05 | 0.19 |
| 15 | 0.10 | 0.30 | 4.1 | 1300 | 0.20 | 0.16 | 47 | 0.03 | 0.16 |

In the tests Nos. 4 to 9 and 15, the temperature of hot metal is 1200 °C or higher and 1500 °C or lower, and the concentration of carbon was 2% by mass or more, the concentration of copper was 0.1% or more by mass and 1.0% by mass or less, and the concentration of sulfur was 0.01% by mass or more, which fell within a range of preferable conditions of the present invention, and the copper removal ratio (= the concentration of copper in the hot metal after the treatment/the concentration of copper in the hot metal before the treatment) was 0.4 or more, and these proved that the copper removal was carried out well. On the other hand, in the test Nos. 10 to 12, as the copper removal treatment was conducted out of the preferable conditions of the present invention, the copper removal ratio (= (the concentration of copper in the hot metal before the treatment - the concentration of copper in the hot metal after the treatment) x 100/the concentration of copper in the hot metal before the treatment) was less than 40%. In addition, in the test Nos. 13 and 14, the concentration of sulfur was 0.01% by mass or more, which was a preferable condition, however, it did not meet more preferable condition of 0.05% by mass or more. Therefore, the copper removal ratio remained near 40% (less than 40%).

### (Example 3)

Tests were conducted as follows: a shaft furnace having a coke bed formed inside was used to melt copper-containing steel scraps and produce hot metal for steelmaking, this hot metal was subjected to the copper removal treatment with use of flux having soda ash (Na₂CO₃) and iron-sulfur alloy (ferrosulfur) as starting materials, after the copper removal treatment, blast furnace hot metal was mixed with the copper-removed hot metal and this mixed hot metal was subjected to desulfurization with use of a CaO base desulfurization agent.

The temperature of the hot metal for steelmaking produced in the shaft furnace was 1400 °C, the concentration of carbon was 4.0% by mass, the concentration of copper was 0.30% by mass and the concentration of sulfur was 0.11% by mass.

The copper removal treatment was conducted by charging about 60 tons of hot metal for steelmaking in a ladle-shaped refining vessel, adding 50 kg of iron-sulfur alloy (the concentration of sulfur in the alloy: 48% by mass) and 35 kg of soda ash per ton of the hot metal onto the hot metal in refining equipment with mechanical stirrer, immersing impeller covered with a refractory material in the hot metal and rotating the impeller to stir the hot metal and flux. The concentration of copper in the hot metal after the copper removal treatment was 0.14% by mass and the concentration of sulfur was 0.44% by mass.

The slag generated by the copper removal treatment was removed by a slag skimmer, and then, about 60 tons of copper-removed hot metal was mixed, in the ladle-shaped refining vessel, with about 240 tons of blast furnace hot metal produced in the furnace. Of the mixed hot metal, the concentration of copper was 0. 03% by mass and the concentration of sulfur was 0.09% by mass.

The mixed hot metal was subjected to the desulfurization treatment in the refining equipment with mechanical stirrer by adding 20 kg of the CaO base desulfurization agent per ton of the hot metal, immersing the impeller covered with the refractory material in the hot metal and rotating the impeller to stir the hot metal and desulfurization agent. Of the desulfurized hot metal, the concentration of copper was0.03% by mass and the concentration of sulfur as 0.01% by mass.

### (Example 4)

Tests were conducted for detailed study of influence of the temperature of hot metal on the copper removal ratio. The copper removal tests were conducted by charging about 5 tons of hot metal for steelmaking in a ladle-shaped refining vessel (test Nos. 16 to 22) . Refining flux for copper removal was added from a refining agent supplying hopper provided above the ladle. The refining flux for copper removal used was iron-sulfur alloy (ferrosulfur, the percentage of sulfur content: 48% by mass) and soda ash (Na₂CO₃). Stirring of the hot metal in the ladle was carried out by immersing impeller covered with a refractory material in the hot metal and rotating the impeller. Table 3 shows a list of test conditions and test results. Components of the hot metal before the copper removal treatment other than those listed in Table 3 were prepared to have 4.5 to 4.7% by mass of carbon, 0.20% by mass of silicon, 0.15% by mass of manganese and 0.050% by mass of phosphorus.

**Table 3**

| Test No. | Before copper removal treatment | | | Flux for copper removal treatment | | After copper removal treatment | | Copper removal ratio (%) |
|---|---|---|---|---|---|---|---|---|
| | Hot metal [S] (% by mass) | Hot metal [Cu] (% by mass) | Temperature of hot metal (°C) | Soda ash (kg/t-hot metal) | Ferrosulfur (kg/t-hot metal) | Hot metal [S] (% by mass) | Hot metal [Cu] (% by mass) | |
| 16 | 0.10 | 0.30 | 1200 | 30 | 40 | 0.27 | 0.20 | 33 |
| 17 | 0.10 | 0.30 | 1250 | 30 | 40 | 0.33 | 0.10 | 67 |
| 18 | 0.10 | 0.30 | 1300 | 30 | 40 | 0,31 | 0.12 | 60 |
| 19 | 0.10 | 0.30 | 1350 | 30 | 40 | 0.29 | 0.13 | 57 |
| 20 | 0.10 | 0.30 | 1400 | 30 | 40 | 0.28 | 0.15 | 50 |
| 21 | 0.10 | 0.30 | 1450 | 30 | 40 | 0.30 | 0.18 | 40 |
| 22 | 0.10 | 0.30 | 1500 | 30 | 40 | 0.29 | 0.20 | 33 |

Fig. 1 illustrates the relationship between the copper removal ratio and the temperature of hot metal prior to the copper removal treatment. When the temperature of the hot metal ranged from 1250 °C to 1500 °C, the lower the temperature of the hot metal was, the higher the copper removal ratio was. Here, in the test of 1200 °C, the copper removal ratio was lowered to 33.3%. This was because of deterioration of reactivity of the refining flux for copper removal due to decrease in temperature. From these results, it was found that higher copper removal ratio exceeding 50% could be obtained by keeping the temperature of the hot metal in a range of 1250 °C to 1350 °C preferably.

### (Example 5)

The copper removal treatment tests was carried out on about 5 tons of hot metal for steelmaking stored in the ladle-shaped refining vessel by injecting refining flux for copper removal into the hot metal via an injection lance (test No. 23 to 29). In the tests, the injection lance covered with a refractory material was immersed in the hot metal in the ladle and refining flux for copper removal was partially or fully blown, together with nitrogen gas as carrier gas, into the hot metal via the injection lance. Besides addition by injecting via the injection lance, the flux was added by a refining agent supplying hopper above the ladle.

The refining flux for copper removal used was iron-sulfur alloy (ferrosulfur, the percentage of sulfur content: 48% by mass) and soda ash (Na₂CO₃). Table 4 shows a list of test conditions and test results. Components of the hot metal before the copper removal treatment other than those listed in Table 4 were prepared to have 4.5 to 4.7% by mass of carbon, 0.20% by mass of silicon, 0.15% by mass of manganese and 0.050% by mass of phosphorus. The temperature of the hot metal was 1400 °C.

Here, as to the depth of immersion of the injection lance, it is confirmed in another experiment that where the depth of the hot metal bath is H (m) and the distance from the surface of the hot metal bath to the tip end of the injection lance is L (m), L/H of 0.3 or more is sufficient for contribution of the injected flux to copper removal reaction. Besides, as to specification of the used injection lance, any injection lance may be used as far as it can bear immersion in the hot metal and injection of flux. Further, as to the relationship between the flow rate of carrier gas and the speed of injection of flux, it has no influence on metallurgical performance as far as there is no clogging of the injection lance with flux. As to the kind of carrier gas, any inert gas may be used without problem, and for example, an Ar gas may be used as the carrier gas.

**Table 4**

| Test No. | Before copper removal treatment | | Addition by injection lance | | Addition by hopper | | Total | | | After copper removal treatment | | Copper removal ratio (%) |
|---|---|---|---|---|---|---|---|---|---|---|---|---|
| | Hot metal [S] (% by mass) | Hot metal [Cu] (% by mass) | Soda ash (kg/t-hot metal) | Ferrosulfur (kg/t-hot metal) | Soda ash (kg/t-hot metal) | Ferrosulfur (kg/t-hot metal) | Soda ash (kg/t-hot metal) | Ferrosulfur (kg/t-hot metal) | Percentage of addition by injection lance (%) | Hot metal [S] (% by mass) | Hot metal [Cu] (% by mass) | |
| 23 | 0.10 | 0.30 | 30 | 40 | 0 | 0 | 30 | 40 | 100 | 0.29 | 0.14 | 53 |
| 24 | 0.10 | 0.30 | 20 | 25 | 10 | 15 | 30 | 40 | 64 | 0.28 | 0.13 | 57 |
| 25 | 0.10 | 0.30 | 10 | 15 | 20 | 25 | 30 | 40 | 36 | 0.30 | 0.14 | 53 |
| 26 | 0.10 | 0.30 | 5 | 5 | 25 | 35 | 30 | 40 | 14 | 0.31 | 0.15 | 50 |
| 27 | 0.10 | 0.30 | 30 | 0 | 0 | 40 | 30 | 40 | 43 | 0.27 | 0.15 | 50 |
| 28 | 0.10 | 0.30 | 0 | 40 | 30 | 0 | 30 | 40 | 57 | 0.30 | 0.14 | 53 |
| 29 | 0.10 | 0.30 | 0 | 0 | 30 | 40 | 30 | 40 | 0 | 0.30 | 0.18 | 40 |

In the test Nos. 23 to 28, the percentage of addition by the injection lance was changed, however, it was confirmed that there was no significant difference in copper removal ratio, which was about 50%, and that result was almost identical to that of the case using refining equipment with mechanical stirrer. In addition, in the test No. 27, soda ash was only added by injecting via the injection lance and in the test No. 28, ferrosulfur was added by injection only. In these tests, the copper removal ratio were equal to each other.

From the above-described results, it has been confirmed that the copper removal treatment can be also carried out by the method of injecting flux via the injection lance partially or fully, instead of using the refining equipment with mechanical stirrer.

Here, in the test No. 29, the nitrogen gas was only blown via the injection lance and refining flux for copper removal was added from a refining agent supplying hopper above the ladle. As a result of this test, the copper removal ratio was 40%, which was lower than that of the mechanical stirring and injection cases.

### INDUSTRIAL APPLICABILITY

According to the present invention, after copper-containing steel scraps are melted with addition of carbon, copper in hot metal resulting from the steel scraps is removed in sulfur-containing flux. With this method, the copper can be separated efficiently, which is difficult if copper is separated by magnetic separation after steel scraps are decomposed physically. Further, as sulfur in the hot metal that is brought from the sulfur-containing flux or the like is removed after the copper removal treatment, it is possible to obtain the hot metal with less copper and sulfur from the copper-containing steel scraps efficiently, and consequently, to make the copper-containing steel scraps usable as an iron source of high-quality steel and promote use of low-quality steel scraps.

Furthermore, as a shaft furnace having a coke bed inside is used to produce hot metal having a higher-concentration of sulfur, which is then subjected to the copper removal treatment, the copper removal ratio is further improved and the economical efficiency can be also improved.

## Claims

1. A method for removing copper in steel scraps comprising the steps of:
melting copper-containing steel scraps with addition of carbon to produce hot metal for steelmaking;
then, removing copper contained in the hot metal with use of sulfur-containing flux; and
removing sulfur contained in the hot metal, wherein
the concentration of carbon prior to the copper removal treatment is 2% by mass or more and the temperature of the hot metal prior to the copper removal treatment is 1200 °C or higher and 1500 °C or lower.

2. The method of claim 1, wherein the sulfur-containing flux has Na₂S as a main component.

3. The method of claim 1, wherein a material having Na₂CO₃ as a main component and an iron-sulfur alloy are used as starting materials of the sulfur-containing flux.

4. The method of any one of claims 1 to 3, wherein the hot metal before copper removal by the sulfur-containing flux has a temperature of 1200 °C or higher and 1500 °C or lower, and contains carbon at a concentration of 2% by mass or more and copper at a concentration of 0.1% or more by mass and 1.0% by mass or less.

5. The method of claim 4, wherein the hot metal before copper removal by the sulfur-containing flux has a temperature of 1250 °C or higher and 1350 °C or lower.

6. The method of any one of claims 1 to 3, wherein the hot metal before copper removal by the sulfur-containing flux contains sulfur at a concentration of 0.01% by mass or more.

7. The method of any one of claims 1 to 3, wherein removing of the copper contained in the hot metal is carried out by refining equipment with mechanical stirrer.

8. The method of any one of claims 1 to 3, wherein removing of the copper contained in the hot metal is carried out by injecting the sulfur-containing flux with a carrier gas into the hot metal in a refining vessel.

9. The method of any one of claims 1 to 3, wherein removing of the copper contained in the hot metal is carried out by injecting at least a part of a starting material of the sulfur-containing flux with a carrier gas into the hot metal in a refining vessel.

10. The method of any one of claims 1 to 3, wherein melting of the copper-containing steel scraps with addition of the carbon is conducted by using a shaft furnace having a coke bed formed inside.

11. The method of claim 6, wherein melting of the copper-containing steel scraps with addition of the carbon is conducted by using a shaft furnace having a coke bed formed inside.

12. The method of any one of claims 1 to 3, wherein melting of the copper-containing steel scraps with addition of the carbon is conducted by using a shaft furnace having a coke bed formed inside, and the sulfur-containing flux is supplied to the hot metal passing through a tilting runner at casthouse from the shaft furnace to a hot metal vessel thereby to remove the copper in the hot metal.

13. The method of any one of claims 1 to 3, wherein removing of the sulfur contained in the hot metal is carried out by refining equipment with mechanical stirrer.

14. The method of any one of claims 1 to 3, wherein the hot metal from which the copper is removed with use of the sulfur-containing flux is mixed with blast furnace hot metal, and then, the sulfur contained in the hot metal that is mixed with the blast furnace hot metal is removed.

## Patentansprüche

1. Verfahren zur Entfernung von Kupfer in Stahlschrottteilen, das die folgenden Schritte umfasst:
Schmelzen von kupferhaltigen Stahlschrottteilen unter Zugabe von Kohlenstoff, um Roheisen für die Stahlerzeugung herzustellen;
anschließendes Entfernen des Kupfers, das in dem Roheisen enthalten ist, unter Verwendung von schwefelhaltigem Flussmittel; und
Entfernen von Schwefel, der in dem Roheisen enthalten ist, wobei die Konzentration des Kohlenstoffs vor der Behandlung zur Kupferentfernung 2 Gew.% oder mehr beträgt und die Temperatur des Roheisens vor der Behandlung zur Kupferentfernung 1.200°C oder höher und 1.500°C oder niedriger ist.

2. Verfahren gemäß Anspruch 1, wobei das schwefelhaltige Flussmittel Na₂S als Hauptkomponente enthält.

3. Verfahren gemäß Anspruch 1, wobei ein Material, das Na₂Co₃ als eine Hauptkomponente enthält, und ein Eisen-Schwefel-Gemisch als Ausgangsmaterialien für das schwefelhaltige Flussmittel verwendet werden.

4. Verfahren gemäß einem der Ansprüche 1 bis 3, wobei das Roheisen vor der Kupferentfernung durch das schwefelhaltige Flussmittel eine Temperatur von 1.200°C oder höher und 1.500°C oder niedriger besitzt und Kohlenstoff bei einer Konzentration von 2 Gew.% oder mehr und Kupfer bei einer Konzentration von 0,1 Gew.% oder mehr und 1 Gew.% oder weniger enthält.

5. Verfahren gemäß Anspruch 4, wobei das Roheisen vor der Kupferentfernung durch das schwefelhaltige Flussmittel eine Temperatur von 1.250°C oder höher und 1.350°C oder niedriger besitzt.

6. Verfahren gemäß einem der Ansprüche 1 bis 3, wobei das Roheisen vor der Kupferentfernung durch das schwefelhaltige Flussmittel Schwefel bei einer Konzentration von 0,01 Gew.% oder mehr enthält.

7. Verfahren gemäß einem der Ansprüche 1 bis 3, wobei das Entfernen des Kupfers, das in dem Roheisen enthalten ist, mit Hilfe einer Aufbereitungsanlage mit mechanischem Rührer durchgeführt wird.

8. Verfahren gemäß einem der Ansprüche 1 bis 3, wobei das Entfernen des Kupfers, das in dem Roheisen enthalten ist, durch Injektion des schwefelhaltigen Flussmittels mit einem Trägergas in das Roheisen in einem Frischgefäß durchgeführt wird.

9. Verfahren gemäß einem der Ansprüche 1 bis 3, wobei das Entfernen des Kupfers, das in dem Roheisen enthalten ist, durch Injektion von wenigstens einem Teil eines Ausgangsmaterials des schwefelhaltigen Flussmittels mit einem Trägergas in das Roheisen in einem Frischgefäß durchgeführt wird.

10. Verfahren gemäß einem der Ansprüche 1 bis 3, wobei das Schmelzen der kupferhaltigen Stahlschrottteile unter Zugabe von Kohlenstoff durchgeführt wird, indem ein Schachtofen mit einer Füllkokssäule, die sich darin gebildet hat, verwendet wird.

11. Verfahren gemäß Anspruch 6, wobei das Schmelzen der kupferhaltigen Stahlschrottteile unter Zugabe von Kohlenstoff durchgeführt wird, indem ein Schachtofen mit einer Füllkokssäule, die sich darin gebildet hat, verwendet wird.

12. Verfahren gemäß einem der Ansprüche 1 bis 3, wobei das Schmelzen der kupferhaltigen Schrotteile unter Zugabe von Kohlenstoff durchgeführt wird, indem ein Schachtofen mit einer Füllkokssäule, die sich darin gebildet hat, verwendet wird, und das schwefelhaltige Flussmittel zu dem Roheisen zugeführt wird, indem es eine Kipprinne in der Gießhalle von dem Schachtofen zu einem Roheisen-Gefäß durchläuft, wodurch das Kupfer in dem Roheisen entfernt wird.

13. Verfahren gemäß einem der Ansprüche 1 bis 3, wobei das Entfernen es Schwefels, das in dem Roheisen enthalten ist, mit Hilfe einer Aufbereitungsanlage mit mechanischem Rührer durchgeführt wird.

14. Verfahren gemäß einem der Ansprüche 1 bis 3, wobei das Roheisen, aus dem das Kupfer unter Verwendung des schwefelhaltigen Flussmittels entfernt wird, mit Hochofen-Roheisen gemischt wird und anschließend der Schwefel, der in dem Roheisen enthalten ist, das mit dem Hochofen-Roheisen gemischt wird, entfernt wird.

## Revendications

1. Procédé pour éliminer du cuivre dans des déchets d'acier, comprenant les étapes de :
fondre des déchets d'acier contenant du cuivre avec addition de carbone afin de produire de la fonte brute pour la production d'acier ;
ensuite éliminer du cuivre contenu dans la fonte brute par utilisation d'un flux contenant du soufre ; et
éliminer le soufre contenu dans la fonte brute,
dans lequel la concentration de carbone avant le traitement d'élimination du cuivre est de 2 % en masse ou plus et la température de la fonte brute avant le traitement d'élimination du cuivre est de 1200°C ou plus et de 1500°C ou moins.

2. Procédé selon la revendication 1, dans lequel le flux contenant du soufre a du Na₂S en tant que composant principal.

3. Procédé selon la revendication 1, dans lequel un matériau ayant du Na₂CO₃ en tant que composant principal et un alliage de fer-soufre sont utilisés en tant que matériaux de départ du flux contenant du soufre.

4. Procédé selon l'une quelconque des revendications 1 à 3, dans lequel la fonte brute avant élimination du cuivre par le flux contenant du soufre a une température de 1200°C ou plus et de 1500°C ou moins, et contient du carbone à une concentration de 2 % en masse ou plus et du cuivre à une concentration de 0,1 % en masse ou plus et de 1,0 % en masse ou moins.

5. Procédé selon la revendication 4, dans lequel la fonte brute avant élimination du cuivre par le flux contenant du soufre a une température de 1250°C ou plus et de 1350°C ou moins.

6. Procédé selon l'une quelconque des revendications 1 à 3, dans lequel la fonte brute avant élimination du cuivre par le flux contenant du soufre contient du soufre à une concentration de 0,01 % en masse ou plus.

7. Procédé selon l'une quelconque des revendications 1 à 3, dans lequel l'élimination du cuivre contenu dans la fonte brute est effectuée par un équipement de raffinage avec un agitateur mécanique.

8. Procédé selon l'une quelconque des revendications 1 à 3, dans lequel l'élimination du cuivre contenu dans la fonte brute est effectuée par injection du flux contenant du soufre avec un gaz porteur dans la fonte brute dans une cuve de raffinage.

9. Procédé selon l'une quelconque des revendications 1 à 3, dans lequel l'élimination du cuivre contenu dans la font brute est effectuée par injection d'au moins une partie d'un matériau de départ du flux contenant du soufre avec un gaz porteur dans la fonte brute dans une cuve de raffinage.

10. Procédé selon l'une quelconque des revendications 1 à 3, dans lequel la fusion des déchets d'acier contenant du cuivre avec addition du carbone est effectuée par utilisation d'un four vertical ayant un lit de coke formé à l'intérieur.

11. Procédé selon la revendication 6, dans lequel la fusion des déchets d'acier contenant du cuivre avec addition du carbone est effectuée par utilisation d'un four vertical ayant un lit de coke formé à l'intérieur.

12. Procédé selon l'une quelconque des revendications 1 à 3, dans lequel la fusion des déchets d'acier contenant du cuivre avec addition du carbone est effectuée par utilisation d'un four vertical ayant un lit de coke formé à l'intérieur, et le flux contenant du soufre est délivré à la fonte brute passant par l'intermédiaire d'un chenal à inclinaison au centre de coulée depuis le four vertical dans une cuve de fonte brute de façon que le cuivre soit ainsi éliminé de la fonte brute.

13. Procédé selon l'une quelconque des revendications 1 à 3, dans lequel l'élimination du soufre contenu dans la fonte brute est effectuée par un équipement de raffinage avec un agitateur mécanique.

14. Procédé selon l'une quelconque des revendications 1 à 3, dans lequel la fonte brute dont le cuivre est éliminé par utilisation du flux contenant du soufre est mélangé avec de la fonte brute de haut fourneau, et ensuite le soufre contenu dans la fonte brute qui est mélangé avec la fonte brute du haut fourneau est éliminé.
